# EUROPÄISCHE PATENTANMELDUNG

(11) **EP 4 036 739 A1**
(43) Veröffentlichungstag der Anmeldung: **03.08.2022**
(21) Anmeldenummer: 21154323.6
(22) Anmeldetag: 29.01.2021
(51) Int. Cl.: G06F 11/36, G06F 8/75, G06F 8/77

(54) **FEHLERANFÄLLIGKEIT EINER BUILD-PIPELINE**

(71) Anmelder: Siemens Aktiengesellschaft, 80333 München (DE)
(72) Erfinder: Gasiba, Tiago, 81549 München (DE); Riener, Silvio, 85748 Garching bei München (DE)

(57) **Zusammenfassung**

Die Erfindung betrifft ein Verfahren, eine Vorrichtung sowie eine Verwendung der Vorrichtung oder des Verfahrens zum Generieren eines Signals indikativ für eine Fehleranfälligkeit für zumindest eine Stufe einer Build-Pipeline für ein Softwareprojekt in einer vorgegebenen Build-Umgebung, wobei die zumindest eine Stufe der Build-Pipeline eine oder mehrere Softwaredateien mittels eines Analyseverfahrens analysiert und zumindest einen Bericht mit Analyseinformation bezüglich der Analyse bereitstellt, zum Bereitstellen von zumindest einem Codefragment und einer dazugehörigen Fehlerbeschreibung, wobei die Fehlerbeschreibung zumindest eine erwartete Teilinformation des zumindest einen Berichts wiedergibt, wobei die zumindest eine erwartete Teilinformation bei dem Analysieren der Softwaredatei aufweisend das Codefragment aufgrund des Codefragments erzeugt wird, zum Erstellen der Softwaredatei umfassend das Codefragment, wobei die Softwaredatei nachfolgend in der zumindest einen Stufe analysiert wird, zum Empfangen des zumindest einen Berichts während oder nach Durchführung der Analyse in der jeweiligen Stufe zum Auswerten der Analyseinformation des zumindest einen Berichts unter Berücksichtigung der Fehlerbeschreibung und zum Generieren des Signals, falls das Auswerten ergibt, dass der zumindest eine Bericht keine einzige der zumindest einen erwarteten Teilinformation wiedergibt.

## Beschreibung

Die Erfindung betrifft eine Vorrichtung und ein Verfahren zum Ermitteln einer Fehleranfälligkeit einer Build-Pipeline

In der Softwareentwicklung werden durch einen Build-Prozess Softwaredateien analysiert und diese in ein maschinenlesbares Format umgewandelt, siehe [1]. Der Build Prozess umfasst mehrere Stufen und wird daher durch eine Pipeline, auch Build-Pipeline genannt, realisiert, siehe [2]. Innerhalb jeder Stufe kommen ein oder mehrere Analyseverfahren zum Einsatz, die spezifische Aufgaben übernehmen, wie beispielsweise eine Versionskontrolle, eine Analyse der Codequalität und / oder eine Kompilierung der Softwaredateien. Es gibt Analyseverfahren, die die Qualität der zu analysierenden Softwaredateien prüfen, beispielsweise, ob ein Virus in der Softwaredatei vorhanden ist. Die Stufen werden sequentiell abgearbeitet, wobei der Ausgang einer Stufe Daten in den Eingang der nachfolgenden Stufe leitet.

Aufgrund einer Zunahme an Stufen durch gestiegene Anforderungen an die Build-Pipeline stammen die Analyseverfahren oftmals nicht mehr von einem einzigen Hersteller oder werden nur teilweise selbst entwickelt. Auch ist ein Wechsel des Analyseverfahrens während der Softwareentwicklung wünschenswert, z.B. weil eine Alternative eines spezifischen Analyseverfahrens preiswerter ist als ein aktuell verwendetes Analyseverfahren oder weil ein neues Analyseverfahren leistungsfähiger sein soll. Jedoch bedeutet jede Änderung eines Analyseverfahrens oder eine Änderung einer Konfiguration der Build-Pipeline eine potenzielle Erhöhung einer Fehleranfälligkeit - also eine Verschlechterung der Qualität - der Build-Pipeline, beispielsweise für ein Nicht-Erkennen von Sicherheitslücken im Softwarecode.

Daher besteht eine Aufgabe der Erfindung darin, eine Vorrichtung, ein Verfahren und eine Verwendung der Vorrichtung und/oder des Verfahrens anzugeben, bei denen eine Qualität einer Build-Pipeline automatisch geprüft werden kann. Zudem soll bei Änderungen einer einzelnen Komponente, wie beispielsweise des Analyseverfahrens, oder bei Änderung der Konfiguration der Build-Pipeline eine Verschlechterung der Qualität gegenüber einem Zustand vor der Änderung automatisch und kosteneffizient ermittelbar sein.

Diese Aufgabe wird durch die unabhängigen Ansprüche gelöst. Weiterbildungen der Erfindung sind den abhängigen Ansprüchen zu entnehmen.

Die Erfindung betrifft eine Vorrichtung zum Generieren eines Signals indikativ für eine Fehleranfälligkeit für zumindest eine Stufe einer Build-Pipeline für ein Softwareprojekt in einer vorgegebenen Build-Umgebung, wobei die zumindest eine Stufe der Build-Pipeline eine oder mehrere Softwaredateien mittels eines Analyseverfahrens analysiert und zumindest einen Bericht mit Analyseinformation bezüglich der Analyse bereitstellt, mit folgenden Einheiten:
- Bereitstelleinheit zum Bereitstellen von zumindest einem Codefragment und einer dazugehörigen Fehlerbeschreibung, wobei die Fehlerbeschreibung zumindest eine erwartete Teilinformation des zumindest einen Berichts wiedergibt, wobei die zumindest eine erwartete Teilinformation bei dem Analysieren der Softwaredatei aufweisend das Codefragment aufgrund des Codefragments erzeugbar ist;
- Erstelleinheit zum Erstellen der Softwaredatei umfassend das Codefragment, wobei die Softwaredatei nachfolgend in der zumindest einen Stufe analysierbar ist;
- Empfangseinheit zum Empfangen des zumindest einen Berichts während oder nach Durchführung der Analyse in der jeweiligen Stufe;
- Auswerteeinheit zum Auswerten der Analyseinformation des zumindest einen Berichts unter Berücksichtigung der Fehlerbeschreibung;
- Generierungseinheit zum Generieren des Signals, falls das Auswerten ergibt, dass der zumindest eine Bericht keine einzige der zumindest einen erwarteten Teilinformation wiedergibt.

Durch die Vorrichtung wird bewirkt, dass die Qualität und somit die Fehleranfälligkeit einer Stufe der Build-Pipeline in einfacher und automatisierter Art und Weise getestet und mithilfe des Signals angezeigt werden kann. Dies ermöglicht eine kostengünstige und hocheffiziente Vorgehensweise zur Qualitätssicherung bei der Softwareentwicklung, insbesondere bei einer Änderung der Konfiguration der Build-Pipeline oder einer Änderung eines der Analyseverfahren.

Im Rahmen der Erfindung wird unter dem Begriff Signal eine Nachricht, ein elektrisches Signal, ein visuelles oder ein akustisches Signal verstanden, mit dem eine Person oder ein Prozess informiert werden kann, dass die zumindest eine Stufe der Build-Pipeline eine Fehlerfallanfälligkeit aufweist, da diese Stufe die zumindest eine zu erwartende Teilinformationen des Berichts der Stufe, die beim Analysieren des Codefragment erzeugt werden sollte, nicht erzeugt hat.

Unter Fehleranfälligkeit wird verstanden, dass das Codefragment, welches in der zumindest einen Softwaredatei enthalten ist, durch das Analyseverfahren der Stufe der Build-Pipeline nicht oder nicht wie erwartet erkannt wird. Im Falle des Erkennens des Codefragment durch das Analyseverfahren würde eine zu erwartende Teilinformationen in dem Bericht des Analyseverfahrens enthalten sein, wodurch erkennbar ist, dass das Analyseverfahren das Codefragment erkannt und Hinweise auf dessen Existenz gegeben hat. Wird das Codefragment nicht erkannt, so erhöht sich hierdurch die Fehleranfälligkeit der zumindest einen Stufe, weil ein für die Qualität des Softwareprojekts gefährliches oder schadhaftes Codefragment nicht oder nicht richtig erkannt worden ist.

Im Rahmen der Erfindung wird unter dem Begriff Build-Pipeline eine sequenzielle Analyse in einem oder mehreren Stufen einer oder mehrerer Softwaredateien verstanden, die in einer vorgeben Build-Umgebung des Softwareprojekt bearbeitet werden. Die Analyse wird durch jeweilige Analyseverfahren bewerkstelligt, die beispielsweise eine Codequalität, eine Anfälligkeit der Softwaredateien gegenüber bekannten Viren oder Sicherheitsschlüsseln analysiert. Ferner kann im Rahmen der Build-Pipeline auch eine Codegenerierung, d. h. aus einer Programmiersprache ein maschinenlesbarer Code erzeugt werden.

Unter dem Codefragment wird im Rahmen der Erfindung verstanden, dass eine für die Analyse der jeweiligen Stufe zugrunde liegender Code bereitgestellt wird, der eine potentielle Schwachstelle, wie eine Sicherheitslücke, einen bekannten Virus oder einen für einen Angreifer leicht zu kompromitierenden Softwarecode (auch als Code bezeichnet), z.B. ein Passwort als Klartext, aufweist. Das Codefragment kann sowohl aus einer einzigen Codezeile oder Befehl als auch aus mehreren Codezeilen mit einem oder mehreren Befehlen bestehen, wobei diese mehreren Codezeilen in der nachfolgend zu analysierenden Softwaredatei, die das Codefragment enthält, über mehrere Stellen in der Softwaredatei verteilt ist. Das Codefragment kann in einer gängigen Programmiersprache, wie C, Java, Python, oder auch als maschinenlesbarer Binärcode bereitgestellt werden, wobei das Codefragment derart bereitgestellt wird, dass es sich in zumindest eine Softwaredatei für das Softwareprojekt integrieren lässt. Beispielsweise werden die Softwaredateien des Softwareprojekt in C++ geschrieben, sodass in vorteilhafter Weise das Codefragment auch in C++ bereitgestellt wird. Ermöglicht die Build-Umgebung, dass die zu analysierenden Softwaredateien in verschiedenen Programmiersprachen abgefasst sind, so wird das Codefragment derart bereitgestellt, dass es den Gegebenheiten der Build-Umgebung für das Softwareprojekt angepasst und durch die Build-Pipeline verarbeitbar ist.

Die Fehlerbeschreibung definiert eine oder mehrere zu erwartende Teilinformationen, wobei zumindest eine dieser zu erwartenden Teilinformationen in dem Bericht, welche während oder nach Analyse in der Stufe der Build-Pipeline erzeugt wird, zu erwarten ist, wenn das Analyseverfahren das Codefragement als sicherheitskritisches Fragment findet. Die Fehlerbeschreibung kann die zu erwartenden Teilinformationen mittels einer Sprache wie XML (extensible markup language) beschrieben werden. Hierbei können die zu erwartenden Teilinformationen neben bestimmten Schlüsselwörtern oder Schlüsselwörterkombinationen einzeln oder in Kombination mit weiteren Merkmale, die in dem Bericht erwartet werden, aufweisen, wie beispielsweise eine Positionsangabe des Codefragments in der Softwaredatei mit der zumindest eines der Schlüsselwörter verknüpft ist. In dem unabhängigen Anspruch wird eine Textpassage "der zumindest eine Bericht keine einzige der zumindest einen erwarteten Teilinformation wiedergibt" verwendet. Diese Textpassage bedeutet anders ausgedrückt, dass der Bericht keine Information aufweist, die zumindest einer der zu erwartenden Teilinformationen zuordenbar ist bzw. entspricht.

Als Softwaredatei wird eine Datei verstanden, in der mittels einer oder mehrerer gängiger Programmiersprachen Befehle in ein oder mehreren Codezeilen für einen Prozessor, wiedergegeben sind. So können in der Softwaredatei Befehle in mehreren Codezeilen mittels der Programmiersprache C wiedergegeben werden, die einzelne Schritte eines Algorithmus abbilden.

Beim Erstellen der Softwaredatei kann das Codefragment in eine bestehende Softwaredatei als ein Block eingefügt bzw. an mehreren Stellen eingefügt werden oder das Codefragment beschreibt alle Zeilen der Softwaredatei.

In einer Weiterbildung der Vorrichtung ist die Fehlerbeschreibung durch zumindest eines der folgenden Elemente charakterisierbar:
a) ein oder mehrere Schlüsselwörter, welche in dem Bericht zumindest teilweise enthalten sein müssen;
b) Positionsangabe, insbesondere eine oder mehrere Zeilennummern, an der oder denen zumindest ein Teil des Codefragments in der Softwaredatei detektierbar oder enthalten ist, und die in dem Bericht enthalten sein muss;
c) Kombination aus mehreren Schlüsselwörtern und optional ergänzt mit zumindest einer Positionsangabe, die in dem Bericht enthalten sein muss.

Diese Weiterbildung zeigt den Vorteil, dass die zu erwartende Teilinformationen aufgrund der Analyse der Softwaredatei umfassend das Codefragment detailliert beschrieben werden kann, um in dem Bericht zweifelsfrei erkannt werden zu können bzw. zweifelsfrei angeben zu können, dass keine einzige der erwartbaren Teilinformationen in dem Bericht vorhanden ist.

In einer vorzugsweisen Weiterbildung der Vorrichtung ist die Fehlerbeschreibung in Abhängigkeit von der Stufe der Build-Pipeline und/oder in Abhängigkeit des Analyseverfahrens der Stufe bereitstellbar.

Diese Weiterbildung ermöglicht spezifisch für jede Stufe bzw. jedes Analyseverfahren eine jeweilige spezifische Fehlerbeschreibung bereitzustellen, wodurch das Auswerten der Analyseinformation zuverlässiger erfolgen kann, als beispielsweise mit einer Fehlerbeschreibung, die für zwei oder mehrere Stufen der Build-Pipeline zur Verfügung gestellt wird. Zudem kann in Kenntnis des verwendeten Analyseverfahrens die in dem Bericht zu erwartende Analyseinformation in Abhängigkeit von dem Analyseverfahren angegeben werden. So kann beispielsweise auch eine Sprache, die durch das Analyseergebnis verwendet wird, wie beispielsweise Deutsch oder Englisch, durch die Fehlerbeschreibung spezifisch abgebildet werden.

In einer vorzugsweisen Weiterbildung der Vorrichtung ist die Fehlerbeschreibung in Abhängigkeit von zumindest zwei der Stufen der Build-Pipeline und/oder in Abhängigkeit des jeweiligen Analyseverfahrens der zumindest zwei der Stufen bereitstellbar.

Diese Weiterbildung ermöglicht die Fehlerbeschreibung in einer kompakten und speichereffizienten Art und Weise bereitzustellen. Zudem kann die Auswertung schneller erfolgen, weil die Fehlerbeschreibung für Berichte mehrere Analyseverfahren bzw. Stufen einsetzbar ist.

In einer Weiterbildung der Vorrichtung ist die Erstelleinheit ferner derart ausgebildet, dass das zumindest eine Codefragment in eine vorhandene Softwaredatei oder in eine neu zu erzeugende Softwaredatei einbringbar ist.

Hierdurch kann in sehr flexibler Art und Weise auf die Gegebenheiten eines Softwareprojekts, insbesondere auch auf bestehende Softwaredateien, eingegangen werden. Ist es beispielsweise kritisch in eine bestehende Softwaredatei das Codefragment zu integrieren, so kann das Codefragment auch in einer eigenständigen, ggfs. neuen, Datei hinterlegt werden. Wird das Codefragment in eine bestehende Datei integriert, so kann beispielsweise durch das Softwarefragment bestehender Code mit sicherheitskritischem Code ersetzt werden. Letzteres ermöglicht das Einbringen des Codefragments derart, dass dem jeweiligen Analyseverfahren nicht sofort durch das Vorhandensein einer weiter Softwaredatei eine mögliche Veränderung des Softwareprojekt und der dazugehörigen Softwaredateien ermöglicht wird. Hierdurch wird die Qualität einer Bewertung, ob die Build-Pipeline mehr oder weniger fehleranfällig ist verbessert.

In einer Weiterbildung der Vorrichtung ist die Erstelleinheit ferner derart ausgebildet, dass eine Positionsangabe, insbesondere eine Zeilennummer, an der das zumindest eine Codefragment in die Softwaredatei einbringbar ist, an die Bereitstelleinheit zum Bereitstellen in der Fehlerbeschreibung übermittelbar ist.

Diese Weiterbildung zeigt insbesondere den Vorteil, dass das Codefragment nicht der eine feste Stelle, sondern an eine beliebige Stelle in eine bestehende Softwaredatei eingebracht werden kann. Dies erhöht die Flexibilität beim Einsatz der Vorrichtung und verbessert auch eine Qualität beim Erkennen einer Fehleranfälligkeit der zu zumindest einen Stufe, weil das Einbringen des Codefragment in die Softwaredatei sehr flexibel gestaltbar ist.

In einer Weiterbildung der Vorrichtung ist die Erstelleinheit ferner dazu ausgebildet, dass nach Erstellen der Softwaredatei durch Aussenden eines Triggersignals die Build-Pipeline startbar ist.

Hierdurch kann die Verwendung der Vorrichtung optimiert werden, weil das Starten der Build-Pipeline gezielt nach einbringen des Codefragments in die Softwaredatei gestartet werden kann. Hierdurch kann auch ein zeitlicher Ablauf für Tests neuer Analyseverfahren in der Build-Pipeline verbessert werden.

Die Erfindung betrifft auch ein Verfahren zum Generieren eines Signals indikativ für eine Fehleranfälligkeit für zumindest eine Stufe einer Build-Pipeline für ein Softwareprojekt in einer vorgegebenen Build-Umgebung, wobei die zumindest eine Stufe der Build-Pipeline eine oder mehrere Softwaredateien mittels eines Analyseverfahrens analysiert und zumindest einen Bericht mit Analyseinformation bezüglich der Analyse bereitstellt, wobei das Verfahren folgende Schritte ausweist:
- Bereitstellen von zumindest einem Codefragment und einer dazugehörigen Fehlerbeschreibung, wobei die Fehlerbeschreibung zumindest eine erwartete Teilinformation des zumindest einen Berichts wiedergibt, wobei die zumindest eine erwartete Teilinformation bei dem Analysieren der Softwaredatei aufweisend das Codefragment aufgrund des Codefragments erzeugt wird;
- Erstellen der Softwaredatei umfassend das Codefragment, wobei die Softwaredatei nachfolgend in der zumindest einen Stufe analysiert wird;
- Empfangen des zumindest einen Berichts während oder nach Durchführung der Analyse in der jeweiligen Stufe;
- Auswerten der Analyseinformation des zumindest einen Berichts unter Berücksichtigung der Fehlerbeschreibung;
- Generieren des Signals, falls das Auswerten ergibt, dass der zumindest eine Bericht keine einzige der zumindest einen erwarteten Teilinformation wiedergibt.

Das Verfahren zeigt dieselben Vorteile wie die korrespondierende Vorrichtung.

In einer Weiterbildung des Verfahrens wird die Fehlerbeschreibung durch zumindest eines der folgenden Elemente charakterisiert:
a) ein oder mehrere Schlüsselwörter, welche in dem Bericht zumindest teilweise enthalten sein müssen;
b) Positionsangabe, insbesondere eine oder mehrere Zeilennummern, an der oder denen zumindest ein Teil des Codefragments in der Softwaredatei detektierbar oder enthalten ist, und die in dem Bericht enthalten sein muss;
c) Kombination aus mehreren Schlüsselwörtern und optional ergänzt mit zumindest einer Positionsangabe, die in dem Bericht enthalten sein muss.

In einer vorteilhaften Weiterbildung des Verfahrens wird die Fehlerbeschreibung in Abhängigkeit von der Stufe der Build-Pipeline und/oder in Abhängigkeit des Analyseverfahrens der Stufe bereitgestellt.

In einer Weiterbildung des Verfahrens wird die Fehlerbeschreibung in Abhängigkeit von zumindest zwei der Stufen der Build-Pipeline und/oder in Abhängigkeit des jeweiligen Analyseverfahrens der zumindest zwei der Stufen bereitgestellt.

In einer vorteilhaften Weiterbildung des Verfahrens wird das Erstellen der Softwaredatei derart umgesetzt wird, dass das zumindest eine Codefragment in eine vorhandene Softwaredatei oder in eine neu zu erzeugende Softwaredatei integriert wird.

Ferner kann in einer Weiterbildung des Verfahrens das Erstellen der Softwaredatei derart umgesetzt wird, dass eine Positionsangabe, insbesondere eine Zeilennummer, an der das zumindest eine Codefragment in die Softwaredatei integriert wird, zum Bereitstellen in der Fehlerbeschreibung übermittelt wird.

In einer vorteilhaften Weiterbildung des Verfahrens wird das Erstellen der Softwaredatei derart umgesetzt, dass nach Erstellen der Softwaredatei ein Triggersignal zum Starten der Build-Pipeline übermittelt wird.

Das Verfahren und deren Weiterbildungen zeigen dieselben Vorteile wie die korrespondierende Vorrichtung und dessen Weiterbildungen.

Ferner betrifft die Erfindung auch eine Verwendung der Vorrichtung gemäß einem der vorstehenden Ausführungen oder des Verfahrens gemäß einem der vorstehenden Ausführungen in einer Build-Pipeline für ein Softwareprojekt.

Die Verwendung zeigt dieselben Vorteile wie die korrespondierende Vorrichtung bzw. das korrespondierende Verfahren.

Die Erfindung und ihre Weiterbildungen werden anhand nachfolgender Figuren näher erläutert:
- Figur 1:: Ausführungsbeispiel aufweisend eine Vorrichtung zum Generieren eines Signals mit mehreren Einheiten
- Figur 2:: Softwaredatei mit "kritischen" Codefragmenten
- Figur 3:: Ablaufdiagramm aufweisend ein Verfahren zum Generieren eines Signals mit mehreren Einheiten

Nachfolgend sind Elemente mit gleicher Funktion und Wirkungsweise mit denselben Bezugszeichen versehen.

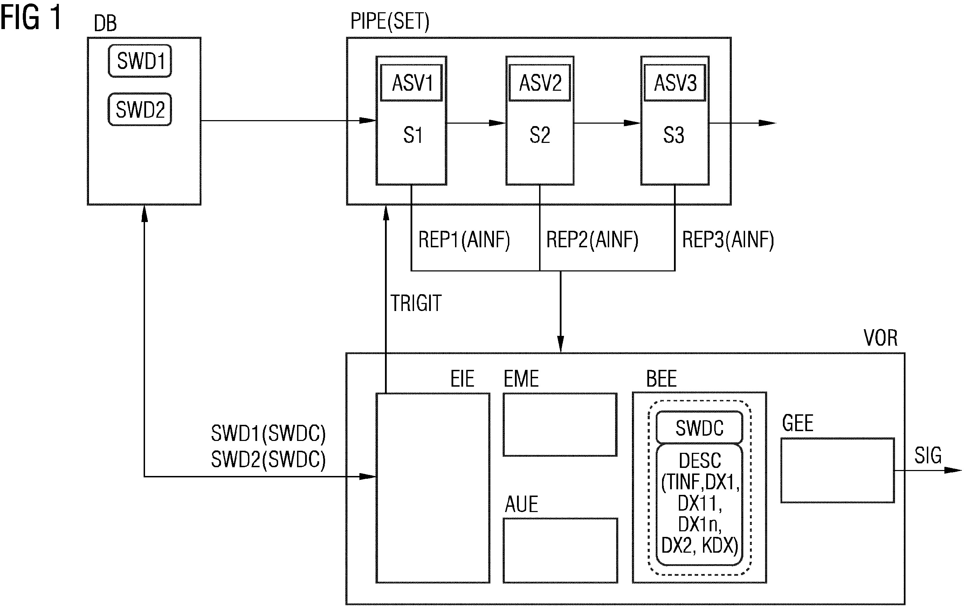

Figur 1 zeigt ein erstes Ausführungsbeispiel einer erfindungsgemäßen Vorrichtung VOR zum Generieren eines Signals SIG. Die Figur zeigt eine Build-Pipeline PIPE, in der für ein Softwareprojekt in einer vorgebaren Build-Umgebung SET in drei Stufen S1, S2, S3 jeweils mittels eines Analyseverfahrens ASV1, ASV2, ASV3 eine jeweilige Analyse einer oder mehrere Softwaredateien SWD1, SWD2 durchgeführt werden. Die Figur 1 zeigt ferner eine Datenbank DB, welche die durch die Build-Pipeline zu analysierenden Softwaredateien speichert, um beispielsweise sequenziell oder gemeinsam nachfolgend in der Build-Pipeline analysiert zu werden.

Beim Durchlaufen der Build-Pipeline wird die jeweilige Softwaredatei zunächst durch das erste Analyseverfahren ASV1 in der ersten Stufe S1 analysiert, wobei ein erster Bericht REP1 zur Analyse erstellt, der beispielsweise zu gefunden Fehlern oder Performancewerten Analyseinformationen AINF aufweist. Die analysierte Softwaredatei wird nachfolgend in geänderter oder ungeänderter Form von der ersten Stufe S1 an die zweite Stufe S2 übergeben, in der die übergebene Softwaredatei durch das zweite Analyseverfahren ASV2 analysiert wird. Das Analyseergebnis wird mittels eines zweiten Berichts REP2 bereitgestellt, der Analyseinformationen AINF aufweist. Nachfolgend wird die Softwaredatei in geänderter oder unveränderter Form von der zweiten an die dritte Stufe S3 der Build-Pipeline übergeben, in der diese mittels des dritten Analyseverfahrens ASV3 analysiert wird. Das Analyseergebnis wird mittels des dritten Berichts REP3 bereitgestellt, welcher Analyseinformationen AINF umfasst. Die Softwaredatei wird dann in unveränderter oder veränderter Form an einen nachfolgenden Prozess übergeben, beispielsweise einer Datenbank oder einer weiteren Stufe der Build-Pipeline (in Figur 1 lediglich symbolisch durch einen Pfeil abgehend von der dritten Stufe S3 gezeigt).

Eine Bereitstelleinheit BEE stellt ein Codefragment SWDC und eine Fehlerbeschreibung DESC bereit. Die Fehlerbeschreibung beschreibt dabei eine oder mehrere erwartete Teilinformationen TINF, die während oder nach der Analyse der Softwaredatei aufweisend das Codefragment aufgrund des Codefragements erzeugt wird bzw. erzeugt werden sollten. Die eine oder mehreren erwarteten Teilinformationen TINF können in dem aus der Analyse erzeugten Bericht enthalten sein.

In diesem Ausführungsbeispiel weist das Codefragment ein Geheimnis auf, welches beim Abfragen einer Login-Information für ein Rechnersystem eingegeben und durch das Codefragment nach Eingabe abgeprüft wird. Ein derartiges Codefragment kann eine Sicherheitslücke darstellen, weil die Login-Information, beispielsweise das Passwort, im Klartext vorliegt und somit durch einen Angreifer des Rechnersystems leicht ermittelt werden kann.

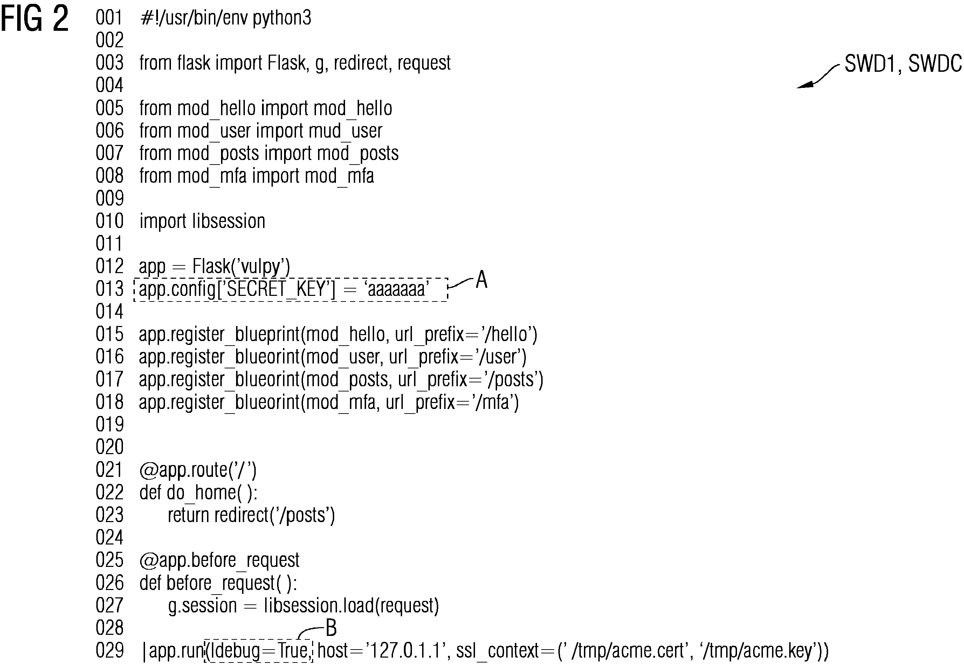

Figur 2 zeigt das Codefragment in Form einer (vollständigen) Softwaredatei SWD1, welche beispielhaft in einer Programmiersprache Python abgefasst ist. Hierbei ist zur leichteren Lesbarkeit der jeweiligen Zeile eine dreistellige Zeilenangabe vorangestellt. In Zeile 013 ist das durch eine gestrichelte Box umrandete kritische Element A "app.config['SECRET-KEY'] = 'aaaaaa'" zu sehen. Das Passwort "aaaaaaa" kann hierbei im Klartext dieser Zeile entnommen werden.

Zu diesem Codefragment wird eine Fehlerbeschreibung DESC zur Verfügung gestellt, die Schlüsselwörter aufweist, welche in dem Bericht REP1 der ersten Stufe, beispielweise in Form einer Fehlermeldung als erwartete Teilinformation, erwartet werden. Daneben kann auch eine exakte Zeilenangabe oder eine ungefähre Zeilenangabe angegeben werden, anhand der eine Lokalisierung des kritischen Elements in der Softwaredatei erkennbar ist.

Die Fehlerbeschreibung DESC lautet:
Schlüsselwort: Fehler, Warnung, Error, SECRET_KEY, Passwort, Schlüssel, Sicherheitslücke
Zeile: 012-014

Die Fehlerbeschreibung zeigt hierbei an, dass als erwartete Teilinformationen des Berichts zumindest eines der Schlüsselwörter Fehler, Warnung, Error, SECRET_KEY, Passwort, Schlüssel und Sicherheitslücke erwartet wird. Ferner gibt die Fehlerbeschreibung an, dass der Bericht das Codefragment, wobei das Codefragment auch als kritisches Element bezeichnet wird, durch zumindest eines der Schlüsselwörter in den Zeilen 12-14 ausweisen muss.

Eine Erstelleinheit EIE der Vorrichtung legt das Codefragment als Softwaredatei in der Datenbank DB ab. Beispielsweise ist das Codefragment, wie in Figur 2 gezeigt, bereits eine eigenständige (=vollständige) Softwaredatei SWD1 und kann als diese in der Datenbank DB zur Verarbeitung durch die Build-Pipeline abgelegt werden. Das Ablegen erfolgt hierbei durch Übertragen der Softwaredatei SWD1 von der Vorrichtung zur Datenbank DB.

Alternativ dazu kann das Codefragment eine einzelne oder mehrere Codezeilen aufweisen, wobei die Erstelleinheit das Codefragment in einer der bestehenden Softwaredateien in der Datenbank abgelegt. Hierzu überträgt die Erstelleinheit die Softwaredatei SWD2 von der Datenbank DB zu sich, fügt ein oder ersetzt eine oder mehrere Codezeilen in der Softwaredatei SWD2 gemäß dem Codefragment, und überträgt die geänderte Softwaredatei aufweisend das Codefragment SWD2(SWDC) zum Speichern an die Datenbank DB. Hierbei kann sich die Erstelleinheit die Zeile merken, in der das Codefragment in der Softwaredatei abgelegt ist und gibt diese Angabe an die Bereitstelleinheit zum Bereitstellen dieser Zeilenangabe in der Fehlerbeschreibung DESC weiter. Beispielsweise umfasst das Codefragment nur das kritische Element A. Zum Einfügen des Codefragements in die Softwaredatei sucht die Erstelleinheit eine Codezeile mit dem Syntaxelement entsprechend dem kritischen Element A, zum Beispiel "app.config['SECRET-KEY']". Diese Codezeile wird nach Auffinden, beispielsweise Zeile 013, durch das Codefragment in "app.config['SECRET-KEY'] = 'aaaaaa'" ersetzt. Die gefundene Zeile 013 kann nachfolgend in die Fehlerbeschreibung DESC eintragen werden, die dann für das kritische Element als Position umfasst: Zeile: 013.

Nachfolgend wird durch einen Trigger TRGIT, beispielsweise initiiert durch die Erstelleinheit oder durch die Build-Pipeline aufgrund einer Änderung von Softwaredateien in der Datenbank DB, die Build-Pipeline gestartet. Zunächst holt sich die Build-Pipeline eine oder mehrere Softwaredateien, die in der Build-Pipeline Stufe für Stufe S1, S2, S3 analysiert werden sollen, jedoch zumindest die Softwaredatei in der das Codefragment enthalten ist. Im vorliegenden Beispiel wird in der ersten Stufe S1 durch das erste Analyseverfahren ASV1 analysiert, ob die jeweilige Softwaredatei Codeteile enthält, die einem bekannten Virus oder Trojaner zuordenbar sind. In der zweiten Stufe S2 wird durch das zweite Analyseverfahren ASV2 ermittelt, ob die jeweilige Softwaredatei Schwachstellen bezüglich einer Geheimhaltung von Passwörtern bzw. Sicherheitsschlüsseln aufweist. In einer dritten Stufe S3 werden nicht sicherheitsrelevante Analysen durch das dritte Analyseverfahren ASV3 durchgeführt, bei dem beispielsweise eine maschinenlesbare und auf einem Rechnersystem ausführbare Datei erstellt wird.

Alle drei Stufen liefern jeweils einen Bericht REP1, REP2, REP3 während oder nach der Durchführung der jeweiligen Analyse, die durch eine Empfangseinheit EME empfangen werden. Der jeweilige Bericht zeigt zumindest eine Analyseinformation AINF bezüglich eines Ergebnisses der Analyse der jeweiligen Stufe. Der zweite Bericht REP2 weist hierbei unter anderem folgende Analyseinformationen AINF auf: "Softwaredatei SWD1: Warnung in Zeile 013".

Nach Empfang des zweiten Berichts REP2 wird dessen Inhalt an eine Auswerteeinheit AUE zum Auswerten unter Berücksichtigung der Fehlerbeschreibung gegeben. Das Ergebnis der Auswerteeinheit zeigt, dass ein oder mehrere Schlüsselwörter und / oder eine Positionsangabe, wie Zeilennummer, mit der Fehlerbeschreibung übereinstimmen. Somit hat das Analyseverfahren das Codefragement bzw. das kritische Element erkannt und es wird nachfolgend durch eine Generierungseinheit GEE kein Signal generiert.

Nachfolgend werden mehrere Beispiele für die Fehlerbeschreibung angegeben.

### 1. Bespiel für die Fehlerbeschreibung

Die Fehlerbeschreibung weist drei Schlüsselwörter DX11, DX12, DX13 und die Positionsangabe DX2 als Zeile auf, wobei zumindest eines der Schlüsselwörter in Kombination mit der Zeilenangabe 12 bis 14 als Analyseinformation in dem Bericht erscheinen muss, damit das Codefragment durch die Analyse richtig erkannt wird:
{"Fehler" oder "Warnung" oder "Error"} und
{Zeile: "012-014"}

Somit können drei zu erwartende Teilinformationen TINF gebildet werden, wobei zumindest eine der Teilinformationen in dem Bericht enthalten sein muss, damit kein Signal generiert wird, bzw. wenn kein einziges der Teilinformationen in dem Bericht enthalten ist, das Signal generiert wird:
TINF1: "Fehler" und "012-014"
TINF2: "Warnung" und "012-014"
TINF3: "Error" und "012-014"

Der zweite Bericht zeigt folgenden Inhalt, wobei Übereinstimmungen, d.h. erwartete Teilinformationen der Fehlerbeschreibung mit Analyseinformationen, durch Unterstreichung in allen Beispielen gekennzeichnet sind:
"Softwaredatei SWD1: keine Fehler gefunden"

Der zweite Bericht zeigt zwar eines der Schlüsselwörter "Fehler" an, jedoch fehlt die Zeilenangabe. Daher erkennt die Auswerteeinheit, dass der Bericht keine der drei Teilinformationen aufweist, der durch die Fehlerbeschreibung charakterisiert wird. Daher wird durch die Generierungseinheit GEE das Signal SIG generiert, das anzeigt, dass die zweite Stufe das Codefragment mit dem kritischen Element nicht erkannt hat. Somit zeigt das generierte Signal an, dass das Analyseverfahren der zweiten Stufe eine Fehleranfälligkeit, also eine Sicherheitslücke, zumindest gegenüber dem kritischen Element des Codefragments aufweist.

### 2. Beispiel für die Fehlerbeschreibung

Ein zweites Beispiel für den zweiten Bericht basierend auf der obigen Fehlerbeschreibung (1. Beispiel) lautet:
"Softwaredatei SWD1: Warnung in Zeile 013".

Hierbei stimmt sowohl eines der Schlüsselwörter als auch die erwartete Zeile 012-014 der Fehlerbeschreibung mit dem zweiten Bericht überein. Daher wird in diesem Beispiel kein Signal erzeugt, weil das kritische Element, also das Codefragment, erkannt wird. Zu Dokumentationszwecken kann jedoch ein anderes Signal generiert werden, das die Erkennung des Codefragments anzeigt. Das Ausbleiben des Signals SIG zeigt somit an, dass die Vorrichtung die durch das Codefragment erzeugte Sicherheitslücke erkannt hat und somit die zweite Stufe S2 der Pipeline keine Fehleranfälligkeit für diese Sicherheitslücke aufweist.

### 3. Beispiel für die Fehlerbeschreibung

In einem weiteren Beispiel beschreibt die Fehlerbeschreibung DESC eine Kombination KDX aus mehreren Schlüsselwörtern DX1, DX11...DX1N, wie beispielsweise:
{"Fehler" oder "Warnung" oder "Error"} und
{"SECRET_KEY" oder "Passwort" oder "Schlüssel"}

In diesem Beispiel gibt die Fehlerbeschreibung an, dass aus eines der Schlüsselwörter DX11, gebildet durch Gruppe 1, "Fehler, Warnung, Error" und eines der Schlüsselwörter DX12, gebildet durch Gruppe 2, "SECRET_KEY, Passwort, Schlüssel" in dem zweiten Bericht bei Analyse des Codefragments erwartet wird. Somit lautet beispielsweise eines der zu erwartenden Teilinformationen TINF: "Warnung" und "Schlüssel",

Der zweite Bericht lautet auszugsweise:
"2020:12:25_05:23 Warnung: Element SECRET KEY"

Hierbei werden jeweils ein Schlüsselwort aus den beiden Gruppen 1 und 2 gefunden, sodass die Auswerteeinheit diese beim Auswerten des zweiten Berichts findet und deswegen die Generierungseinheit kein Signal generiert.

### 4. Beispiel für die Fehlerbeschreibung

Hierbei charakterisiert die Fehlerbeschreibung, dass neben den Schlüsselwörtern der Fehler bzw. die Warnung an einer bestimmten Position bzw. Zeile gefunden werden muss. Die Fehlerbeschreibung lautet:
{"Fehler" oder "Warnung" oder "Error"} und
{"SECRET_KEY" oder "Passwort" oder "Schlüssel"} und
{Zeile= "012-014"}

Hierbei muss neben einem jeweiligen Schlüsselwort aus der Gruppe 1 aufweisend die Schlüsselwörter "Fehler oder Warnung, Error" und der Gruppe 2 aufweisend die Schlüsselwörter "SECRET_KEY, Passwort, Schlüssel" auch eine Angabe in dem zweiten Bericht enthalten sein, dass das Codefragment in einer der Zeilen 012 bis 014 in der Softwaredatei gefunden wird.

Der zweite Bericht lautet auszugsweise:
"2020:12:25_05:23 Warnung: Element SECRET KEY"

Hierbei wird Signal erzeugt, weil die Auswerteeinheit in dem Bericht keine Zeilenangabe in Kombination mit den jeweiligen Schlüsselwörtern aus den Gruppen 1 und 2 findet, wie durch die Fehlerbeschreibung charakterisiert.

Der zweite Bericht lautet in einer Abwandlung auszugsweise:
"Warnung: Element SECRET KEY in Zeile 13"

Die Auswerteeinheit detektiert in dem zweiten Bericht je eines der Schlüsselwörter aus den Gruppen 1 und 2 und dazu die Zeile 13, welche im Bereich der Adressen 12 bis 14 der Fehlerbeschreibung liegt. Somit umfasst der zweite Bericht Informationen, die durch die Fehlerbeschreibung charakterisiert werden. Als Folge generiert die Generierungseinheit das Signal SIG nicht, weil das Analyseverfahren die durch die Fehlerbeschreibung verwendeten Schlüsselwörter gemäß der zumindest einen erwarteten Teilinformation in dem Bericht findet.

### 5. Beispiel für die Fehlerbeschreibung

In einem weiteren Beispiel der obigen Ausführung liefert der zweite Bericht folgende Information:
"Softwaredatei SWD1; Fehlerfreie Analyse".

Die Auswerteeinheit kann die Fehlerbeschreibung dem zweiten Bericht nicht zuordnen, weil keines der Schlüsselwörter und auch keine Zeilenangabe in dem zweiten Bericht erscheinen. Somit hat das Analyseverfahren der zweiten Stufe die Sicherheitslücke des Codefragments nicht erkannt. Die Generierungseinheit erzeugt daraufhin das Signal SIG

Die Fehlerbeschreibung kann in Abhängigkeit von der Stufe der Build-Pipeline und/oder des Analyseverfahrens bereitgestellt werden. So liefert das erste Analyseverfahren der ersten Stufe seinen Bericht in deutscher Sprache und das zweite Analyseverfahren der zweiten Stufe seinen Bericht in englischer Sprache. Somit beschreibt die Fehlerbeschreibung für die erste Stufe deutsche Schlüsselwörter und die Fehlerbeschreibung für die zweite Stufe englische Wörter. Beide Fehlerbeschreibungen beziehen sich dabei auf dasselbe Codefragment. Bei Vorliegen des ersten Berichts wertet die Analyseeinheit die Analyseinformation des ersten Berichts gegenüber den erwarteten Teilinformationen basierend auf der ersten Fehlerbeschreibung aus. Die Generierungseinheit generiert das Signal, falls das Auswerten ergibt, dass keines der zu erwarteten Teilinformationen der ersten Fehlerbeschreibung in dem ersten Bericht wiedergegeben sind. In analoger Weise wertet die Auswerteeinheit die Analyseinformation des zweiten Berichts unter Berücksichtigung der zweiten Fehlerbeschreibung aus. Nachfolgend erzeugt die Generierungseinheit das Signal, falls der zweite Bericht keines der erwarteten Teilinformationen basierend auf dem zweiten Fehlerbeschreibung wiedergibt. Hierbei kann das Erzeugen des Signals derart geändert werden, dass, falls sowohl auf Basis des ersten Berichts als auch auf Basis des zweiten Berichts jeweils ein Signal erzeugt werden würde ein gemeinsames Signal für beide Berichte erzeugt wird.

Anstelle der Bereitstellung separater Fehlerbeschreibungen für eine jeweilige Stufe der Build-Pipeline kann auch eine Fehlerbeschreibung bereitgestellt werden, die für zwei oder mehrere Stufen durch die Auswerteeinheit verwendet wird.

Neben der Bereitstellung eines kritischen Elements in einem Codefragment können auch zwei oder mehrere kritische Elemente in einem Codefragment vorhanden sein. Figur 2 zeigt hierzu einen Beispielcode, bei dem neben dem kritischen Element A das weitere kritische Element B vorhanden ist. Kritisches Element A, wie bereits beschrieben, betrifft eine Passwortabfrage im Klartext. Mittels des kritischen Elements B wird einem Nutzer erlaubt, eine Applikation zu debuggen. Auch dies kann eine sicherheitskritische Lücke in einer Softwareimplementierung darstellen, da hierdurch eine Applikation deutlich anfälliger für Angriffe ist. Für das Codefragment aus Figur 2 kann die Fehlerbeschreibung für die beiden kritischen Elemente jeweilige erwartete Teilinformationen vorgeben. Die Fehlerbeschreibung lautet beispielsweise:
[{"SECRET_KEY" oder "Passwort" oder "Schlüssel"} und
{Zeile= "013"}]
   und
[{"DEBUG"} und {Zeile= "028-030"}].

Hierbei gibt die Fehlerbeschreibung an, dass der Bericht zum einen zumindest ein Schlüsselwort aus einer Gruppe "SECRET_KEY, Passwort, Schlüssel" mit einer Zeilenangabe "013" und das Schlüsselwort "DEBUG" mit einem Bereich für eine Zeilenangabe "028-030" als erwartete Teilinformationen aufweisen muss. Durch die eckigen Klammern [.] wird angezeigt, dass die innerhalb der eckigen Klammern angegebene Zeilenangabe zusammen mit dem innerhalb der Klammer angegebenen Schlüsselwert /-wörter in dem jeweiligen Bericht erscheinen muss, somit beispielsweise das Schlüsselwort "SECRET_KEY" mit der Zeile 013 und das Schlüsselwort "DEBUG" mit einer der Zeilen 028 bis 030. In analoger Weise können die zusammengehörigen Schlüsselwörter und/oder Positionsangaben durch Setzen von Klammern in der Fehlerbeschreibung angegeben werden. Durch diese Vorgehensweise können mehrere kritische Elemente durch ein einziges Codefragment in effizienter Weise in die Build-Pipeline zur Ermittlung der Fehleranfälligkeit einer oder mehrere Stufen der Build-Pipeline eingebracht und ausgewertet werden.

Nur wenn alle Schlüsselwörter und Positionsangaben gemäß der obigen Beschreibung vorliegen, wird kein Signal erzeugt, welches ein fehleranfälliges Verhalten eines oder mehrerer Analyseverfahren der Build-Pipeline anzeigt.

Die Vorrichtung und ihre Einheiten können in Software, Hardware oder in einer Kombination aus Soft- und Hardware bereitgestellt und implementiert werden. Hierzu können einzelne Schritte, realisiert durch die Einheiten oder durch Verfahrensschritte, als maschinenlesbarer Code in einem Speicher abgelegt sein. Der Speicher ist mit einem Prozessor und Ein- bzw. Ausgabeeinheiten zur Kommunikation mit der Datenbank bzw. der Build- Pipeline über ein oder mehrere Busse verbunden. Der Prozessor kann den Code aus dem Speicher lesen und gemäß den Schritten des erfinderischen Verfahrens bzw. der durch die Einheiten realisierten Funktionen ausführen. Die Vorrichtung bzw. das Verfahren der Erfindung findet beispielsweise in einer Build-Pipeline für ein Softwareprojekt Verwendung. Die Vorrichtung und das Verfahren der Erfindung steht mit der Datenbank und der Build-Pipeline in Kommunikation, also zum Austausch von Informationen wie Softwaredateien und berichten, aber die Build-Pipeline und die Datenbank sind nicht Teil der Vorrichtung bzw. des Verfahrens.

Das durch die Generierungseinheit erzeugte Signal kann auf einem Monitor für einen Administrator der Build-Pipeline zur späteren Behebung visuell dargestellt werden. Alternativ oder in Ergänzung kann das erzeugte Signal in einer Fehlermeldedatei eingetragen werden, die durch den Administrator oder einem Fehlerauswerteprozess der Build-Pipeline zu einem späteren Zeitpunkt auf erkannte Fehleranfälligkeiten der Build-Pipeline untersucht wird.

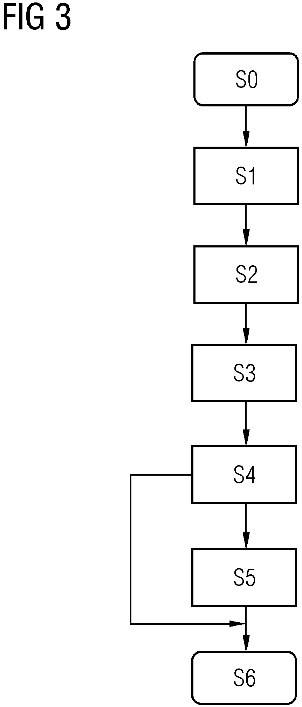

Figur 3 zeigt ein Ablaufdiagramm des Verfahrens, das im Schritt S0 gestartet wird. Nachfolgend werden folgende Schritte S1 bis S7 nacheinander durchlaufen:
Schritt S1: Bereitstellen von zumindest einem Codefragment und einer dazugehörigen Fehlerbeschreibung, wobei die Fehlerbeschreibung zumindest eine erwartete Teilinformation des zumindest einen Berichts wiedergibt, wobei die zumindest eine erwartete Teilinformation bei dem Analysieren der Softwaredatei aufweisend das Codefragment aufgrund des Codefragments erzeugt wird;
Schritt S2: Erstellen der Softwaredatei umfassend das Codefragment, wobei die Softwaredatei nachfolgend in der zumindest einen Stufe analysiert wird;
Schritt S3: Empfangen des zumindest einen Berichts während oder nach Durchführung der Analyse in der jeweiligen Stufe, wobei der zumindest eine Bericht eine Analyseinformation bezüglich der Analyse aufweist;
Schritt S4: Auswerten der Analyseinformation des zumindest einen Berichts unter Berücksichtigung der Fehlerbeschreibung;
Schritt S5: Generieren des Signals, falls das Auswerten ergibt, dass der zumindest der eine Bericht keine einzige der zumindest einen erwarteten Teilinformation wiedergibt.

Nach Beendigung des Schritts S5 oder falls im Schritt S4 zumindest eine der erwarteten Teilinformationen in dem zumindest einen Bericht detektiert werden, folgt Schritt S6, der das Verfahren beendet.

Die obigen Schritte sind dazu ausgebildet Weiterbildungen des erfinderischen Verfahrens zu realisieren.

### Literatur:

[1] "Software build", see https://en.wikipedia.org/wiki/Software build
[2] "Pipeline (computing)", see https://en.wikipedia.org/wiki/Pipeline (computing)

## Patentansprüche

1. Vorrichtung (VOR) zum Generieren eines Signals (SIG) indikativ für eine Fehleranfälligkeit für zumindest eine Stufe (S1, S2, S3) einer Build-Pipeline (PIPE) für ein Softwareprojekt in einer vorgegebenen Build-Umgebung (SET), wobei die zumindest eine Stufe der Build-Pipeline eine oder mehrere Softwaredateien (SWD1, SWD2) mittels eines Analyseverfahrens (ASV1, ASV2, ASV3) analysiert und zumindest einen Bericht (REP2) mit Analyseinformation (AINF) bezüglich der Analyse bereitstellt, mit folgenden Einheiten:
- Bereitstelleinheit (BEE) zum Bereitstellen von zumindest einem Codefragment (SWDC) und einer dazugehörigen Fehlerbeschreibung (DESC), wobei die Fehlerbeschreibung (DESC) zumindest eine erwartete Teilinformation (TINF) des zumindest einen Berichts (REP1, REP2, REP3) wiedergibt, wobei die zumindest eine erwartete Teilinformation (TINF) bei dem Analysieren der Softwaredatei (SWD1) aufweisend das Codefragment (SWDC) aufgrund des Codefragments (SWDC) erzeugbar ist;
- Erstelleinheit (EIE) zum Erstellen der Softwaredatei (SWD1) umfassend das Codefragment (SWDC), wobei die Softwaredatei (SWD1) nachfolgend in der zumindest einen Stufe (S2) analysierbar ist;
- Empfangseinheit (EME) zum Empfangen des zumindest einen Berichts (REP2) während oder nach Durchführung der Analyse in der jeweiligen Stufe (S2);
- Auswerteeinheit (AUE) zum Auswerten der Analyseinformation (AINF) des zumindest einen Berichts (REP2) unter Berücksichtigung der Fehlerbeschreibung (DESC);
- Generierungseinheit (GEE) zum Generieren des Signals (SIG), falls das Auswerten ergibt, dass der zumindest eine Bericht (REP2) keine einzige der zumindest einen erwarteten Teilinformation (TINF) wiedergibt.

2. Vorrichtung nach Anspruch 1,
bei der die Fehlerbeschreibung (DESC) durch zumindest eines der folgenden Elemente (DX1) charakterisierbar ist:
a) ein oder mehrere Schlüsselwörter (DX11, ..., DX1n), welche in dem Bericht (REP2) zumindest teilweise enthalten sein müssen;
b) Positionsangabe (DX2), insbesondere eine oder mehrere Zeilennummern, an der oder denen zumindest ein Teil des Codefragments (SWDC) in der Softwaredatei (SWD1) detektierbar oder enthalten ist, und die in dem Bericht (REP2) enthalten sein muss;
c) Kombination (KDX) aus mehreren Schlüsselwörtern (DX1) und optional ergänzt mit zumindest einer Positionsangabe (DX2), die in dem Bericht (REP2) enthalten sein muss.

3. Vorrichtung nach Anspruch 1 oder 2,
bei der die Fehlerbeschreibung (DESC) in Abhängigkeit von der Stufe (S1, S2, S3) der Build-Pipeline und/oder in Abhängigkeit des Analyseverfahrens (ASV1, ASV2, ASV3) der Stufe (S1, S2, S3) bereitstellbar ist.

4. Vorrichtung nach Anspruch 1 oder 2,
bei der die Fehlerbeschreibung (DESC) in Abhängigkeit von zumindest zwei der Stufen (S1, S2, S3) der Build-Pipeline und/oder in Abhängigkeit des jeweiligen Analyseverfahrens (ASV1, ASV2, ASV3) der zumindest zwei der Stufen (S1, S2, S3) bereitstellbar ist.

5. Vorrichtung nach einem der vorangehenden Ansprüche,
bei der die Erstelleinheit (EIE) ferner derart ausgebildet ist, dass das zumindest eine Codefragment (SWDC) in eine vorhandene Softwaredatei (SWD1) oder in eine neu zu erzeugende Softwaredatei (SWD1) einbringbar ist.

6. Vorrichtung nach Anspruch 5,
bei der die Erstelleinheit (EIE) ferner derart ausgebildet ist, dass eine Positionsangabe (DX2), insbesondere eine Zeilennummer, an der das zumindest eine Codefragment (SWDC) in die Softwaredatei (SWD1) einbringbar ist, an die Bereitstelleinheit (BEE) zum Bereitstellen in der Fehlerbeschreibung (DESC) übermittelbar ist.

7. Vorrichtung nach einem der vorangegangenen Ansprüche,
bei der die Erstelleinheit (EIE) ferner dazu ausgebildet ist, nach Erstellen der Softwaredatei (SWD1) durch Aussenden eines Triggersignals (TRIGIT) die Build-Pipeline (PIPE) startbar ist.

8. Verfahren zum Generieren eines Signals (SIG) indikativ für eine Fehleranfälligkeit für zumindest eine Stufe (S1, S2, S3) einer Build-Pipeline (PIPE) für ein Softwareprojekt in einer vorgegebenen Build-Umgebung (SET), wobei die zumindest eine Stufe der Build-Pipeline eine oder mehrere Softwaredateien (SWD1, SWD2) mittels eines Analyseverfahrens (ASV1, ASV2, ASV3) analysiert und zumindest einen Bericht (REP2) mit Analyseinformation (AINF) bezüglich der Analyse bereitstellt, wobei das Verfahren folgende Schritte aufweist:
- Bereitstellen von zumindest einem Codefragment (SWDC) und einer dazugehörigen Fehlerbeschreibung (DESC), wobei die Fehlerbeschreibung (DESC) zumindest eine erwartete Teilinformation (TINF) des zumindest einen Berichts (REP1, REP2, REP3) wiedergibt, wobei die zumindest eine erwartete Teilinformation (TINF) bei dem Analysieren der Softwaredatei (SWD1) aufweisend das Codefragment (SWDC) aufgrund des Codefragments (SWDC) erzeugt wird;
- Erstellen der Softwaredatei (SWD1) umfassend das Codefragment (SWDC), wobei die Softwaredatei (SWD1) nachfolgend in der zumindest einen Stufe (S2) analysiert wird;
- Empfangen des zumindest einen Berichts (REP2) während oder nach Durchführung der Analyse in der jeweiligen Stufe (S2);
- Auswerten der Analyseinformation (AINF) des zumindest einen Berichts (REP2) unter Berücksichtigung der Fehlerbeschreibung (DESC);
- Generieren des Signals (SIG), falls das Auswerten ergibt, dass der zumindest eine Bericht (REP2) keine einzige der zumindest einen erwarteten Teilinformation (TINF) wiedergibt.

9. Verfahren nach Anspruch 8,
bei dem die Fehlerbeschreibung (DESC) durch zumindest eines der folgenden Elemente (DX1) charakterisiert wird:
a) ein oder mehrere Schlüsselwörter (DX11, ..., DX1n), welche in dem Bericht (REP2) zumindest teilweise enthalten sein müssen;
b) Positionsangabe (DX2), insbesondere eine oder mehrere Zeilennummern, an der oder denen zumindest ein Teil des Codefragments (SWDC) in der Softwaredatei (SWD1) detektierbar oder enthalten ist, und die in dem Bericht (REP2) enthalten sein muss;
c) Kombination (KDX) aus mehreren Schlüsselwörtern (DX1) und optional ergänzt mit zumindest einer Positionsangabe (DX2), die in dem Bericht (REP2) enthalten sein muss.

10. Verfahren nach Anspruch 8 oder 9,
bei dem die Fehlerbeschreibung (DESC) in Abhängigkeit von der Stufe (S1, S2, S3) der Build-Pipeline und/oder in Abhängigkeit des Analyseverfahrens (ASV1, ASV2, ASV3) der Stufe (S1, S2, S3) bereitgestellt wird.

11. Verfahren nach Anspruch 8 oder 9,
bei dem die Fehlerbeschreibung (DESC) in Abhängigkeit von zumindest zwei der Stufen (S1, S2, S3) der Build-Pipeline und/oder in Abhängigkeit des jeweiligen Analyseverfahrens (ASV1, ASV2, ASV3) der zumindest zwei der Stufen (S1, S2, S3) bereitgestellt wird.

12. Verfahren nach einem der Ansprüche 8 bis 11,
bei dem das Erstellen der Softwaredatei (SWD1) derart umgesetzt wird, dass das zumindest eine Codefragment (SWDC) in eine vorhandene Softwaredatei (SWD1) oder in eine neu zu erzeugende Softwaredatei (SWD1) integriert wird.

13. Verfahren nach Anspruch 12,
bei dem das Erstellen der Softwaredatei (SWD1) derart umgesetzt wird, dass eine Positionsangabe (DX2), insbesondere eine Zeilennummer, an der das zumindest eine Codefragment (SWDC) in die Softwaredatei (SWD1) integriert wird, zum Bereitstellen in der Fehlerbeschreibung (DESC) übermittelt wird.

14. Verfahren nach einem der vorangegangenen Ansprüche,
bei dem das Erstellen der Softwaredatei (SWD1) derart umgesetzt wird, nach Erstellen der Softwaredatei (SWD1) ein Triggersignal (TRIGIT) zum Starten der Build-Pipeline (PIPE) übermittelt wird.

15. Verwendung einer Vorrichtung (VOR) nach einem der Ansprüche 1 bis 7 oder eines Verfahrens nach einem der Ansprüche 8 bis 14 in einer Build-Pipeline (PIPE) für ein Softwareprojekt.
